# EUROPÄISCHE PATENTSCHRIFT

(11) **EP 3 669 735 B1**
(45) Veröffentlichungstag und Bekanntmachung des Hinweises auf die Patenterteilung: **13.01.2021**
(21) Anmeldenummer: 19170076.4
(22) Anmeldetag: 18.04.2019
(51) Int. Cl.: A47L 9/14, B01D 39/16

(54) **STAUBSAUGERFILTERBEUTEL MIT VERBESSERTER SCHWEISSNAHTFESTIGKEIT**
VACUUM CLEANER FILTER BAG WITH IMPROVED WELD SEAM STRENGTH
SAC FILTRANT D'ASPIRATEUR À RÉSISTANCE DE CORDON DE SOUDURE AMÉLIORÉE

(30) Priorität: 17.12.2018 EP 18213001
(43) Veröffentlichungstag der Anmeldung: 24.06.2020
(73) Patentinhaber: Eurofilters Holding N.V., 3900 Overpelt (BE)
(72) Erfinder: Sauer, Ralf, 3900 Overpelt (BE); Schultink, Jan, 3900 Overpelt (BE)
(74) Vertreter: Grünecker Patent- und Rechtsanwälte PartG mbB

(56) Entgegenhaltungen:
- EP-A1- 2 452 603
- EP-A1- 3 178 360
- EP-A1- 3 219 374
- WO-A1-2017/158026
- DE-A1-102016 105 706

## Beschreibung

Die Erfindung betrifft einen Staubsaugerfilterbeutel, insbesondere einen Staubsaugerfilterbeutel mit einer Beutelwand, die wenigstens teilweise aus recycliertem Material hergestellt ist.

Besonders nachhaltige und umweltfreundliche Staubsaugerfilterbeutel lassen sich unter Verwendung von Textilabfällen (TLO, Textil Left-Over) und/oder recyclierten Kunststoffen herstellen. Beispiele für solche Filterbeutel sind in der WO 2018/065164 A1 und der WO 2017/158026 A1 offenbart.

Bei solchen Staubsaugerfilterbeuteln ist es unumgänglich, dass sowohl innerhalb einer Lage als auch von Lage zu Lage des Vliesstofflaminats unterschiedliche und inhomogene Grundstoffe Verwendung finden. Beispielsweise werden Stützlagen häufig aus recycliertem Polyethylenterephthalat, rPET, gebildet, während die Feinfilterlage beispielsweise Polypropylen, PP mit einem hohen Meltflowindex und die Kapazitätslage TLO aufweist. Um einen möglichst hohen Anteil an recyclierten Kunststoffen zu erreichen, wird häufig mit einer möglichst leichten Feinfilterlage gearbeitet.

Um die einzelnen Lagen miteinander zu verbinden, wird üblicherweise eine Ultraschallschweißnaht erzeugt. Dabei werden longitudinale Schwingungen mit Frequenzen von 20 kHz bis 35 kHz und Werkzeugamplituden von 5 µm bis 50 µm unter Druck in die zu verbindenden Vliesstoffe eingeleitet. Die durch die Schwingungen entstehende Reibungswärme schmilzt das Material des Vliesstoffes auf. Nach Beenden der Schalleinleitung muss das Material unter dem noch anstehenden Druck zur Verfestigung noch kurz abkühlen. So entsteht in kurzer Zeit eine belastbare Schweißnaht.

Allerdings haben Vliesstoffe eher ungünstige Übertragungseigenschaften für Ultraschallenergie. Vliesstoffe mit vielen Poren haben strukturbedingt einen hohen akustischen Dämpfungsfaktor. Für gute Schweißergebnisse ist es daher notwendig, dass die zu verbindenden Materialien möglichst aufeinander abgestimmt sind, sowohl hinsichtlich der Schmelzpunkte als auch des chemischen Charakters (amorph/teilkristallin). Dies ist nicht immer möglich und erweist sich insbesondere bei den oben erwähnten umweltfreundlichen Staubsaugerfilterbeuteln aus recyclierten Materialien als schwierig.

Zur Verbesserung der Schweißnahtfestigkeit wurden bereits verschiedene Ansätze untersucht.

Die EP 2 944 247 A1 offenbart beispielsweise Strukturen und Dimensionen für Beutelnähte, die, insbesondere bei hohen Flächengewichten, gute Festigkeitswerte erreichen.

Die DE 20 300 781 U1 offenbart Materialstreifen aus einem thermoplastischen Material, welche beliebig angeordnet sein können und die Verbindungsnaht verstärken sollen. Allerdings berücksichtigt die DE 20 300 781 U1 keine Vliesstofflaminate, bei denen sowohl innerhalb einer Lage als auch von Lage zu Lage unterschiedliche und inhomogene Grundstoffe Verwendung finden.

In der nicht vorveröffentlichten Europäischen Patentanmeldung 18 213 001, wird eine vollflächige Zwischenlage, die recycliertes Polypropylen, rPP, als Hauptkomponente umfasst, zur Verbesserung der Schweißnahtfestigkeit vorgeschlagen. Während dadurch eine gute Schweißnahtfestigkeit fertigungsfreundlich erzielt werden kann, ist diese Lösung doch mit zusätzlichem Materialeinsatz verbunden.

Auch bei der Verbindung der Halteplatte mit der Beutelwand kommt es zu Problemen hinsichtlich der Festigkeit der Verbindung, wenn die Beutelwand und/oder die Halteplatte recyclierte Kunststoffe umfasst. Wiederum liegt die Ursache darin, dass die zu verbindenden Materialien nicht aufeinander abgestimmt sind.

Aufgabe der Erfindung ist es daher, einen verbesserten Staubsaugerfilterbeutel bereitzustellen, dessen Beutelwand mit recyclierten Kunststoffen gefertigt ist, und dessen Schweißnähte eine ausreichende Festigkeit aufweisen.

Diese Aufgabe wird durch einen Staubsaugerfilterbeutel gemäß Anspruch 1 und durch das Verfahren gemäß Anspruch 10 gelöst. Besonders vorteilhafte Weiterbildungen finden sich in den Unteransprüchen.

Insbesondere kann die Mindesthöchstzugkraft der wenigstens einen Schweißnaht des Anspruchs 1 bzw. des Anspruchs 10 wenigstens 50 N (bei 5 cm Streifenbreite) betragen.

Dadurch, dass in einem Staubsaugerfilterbeutel nach Anspruch 1 keine vollflächige Materiallage eingesetzt wird, kann der Materialeinsatz reduziert werden. Gleichzeitig ist es möglich, Kunststoffrecyclate einzusetzen, die ökologisch zu bevorzugen sind, ohne dass sich die Schweißnahtfestigkeit zu stark verschlechtert. Insbesondere können ein oder mehrere Schweißvermittler gezielt dort angeordnet werden, wo die Belastung der Schweißnaht am größten und/oder wo die Schweißnahtfestigkeit ohne Schweißvermittler am geringsten ist.

Die der äußersten Lage der Beutelwand (Beutelaußenlage) zugewandte Seite kann insbesondere einen Vliesstoff umfassen, der dem Material der Beutelaußenlage entspricht, beispielsweise rPET, oder daraus bestehen. Die Beutelaußenlage kann insbesondere der Stützlage entsprechen.

Mit dieser Vliesstoffschicht des Schweißvermittlers kann eine Schicht aus einem recyclierten Polymer verbunden sein, insbesondere einer rPP-Folie oder rPE-Folie (recycliertes Polyethylen). Die Schicht aus einem recyclierten Polymer kann direkt auf den Vliesstoff gegossen sein. Zusätzlich kann auf der aufgegossenen Folienschicht noch ein Abdeckvlies oder Abdeckvliesstoff aufgebracht sein. Das Material des Abdeckvlieses oder Abdeckvliesstoffs kann dem Material der Halteplatte entsprechen.

Die Haftung zwischen der Halteplatte und dem Beutelmaterial wird in diesem Beispiel dadurch verbessert, dass sich im Schweißbereich ein Schweißvermittler befindet, welcher auf der Halteplattenseite an das Material der Halteplatte und auf der Beutelseite an das Material der Beutelaußenlage angepasst ist. Miteinander verbunden sind diese beiden Lagen im Beispiel durch eine Gießfolie. Die Verbindung auch chemisch schlecht verträglicher Vliesstoffe mittels einer Gießfolie erfolgt mehr durch eine formschlüssige Verbindung als durch eine Haftung durch Kohäsion oder Adhäsion.

Die Vliesstofflagen können eine Grammatur von 20 bis 100 g/m² aufweisen. Die dazwischen angeordnete Gießfolie kann eine Grammatur von 10 bis 100 g/m² haben.

Gemäß einem ersten Beispiel kann es sich bei der Stützlage des Staubsaugerfilterbeutels um einen Filamentspinnvliesstoff (auch kurz "Spinnvliesstoff" oder "Spunbond"), der aus rPET besteht, als Außenlage der Beutelwand handeln und bei der Feinfilterlage um einen Meltblown-Vliesstoff, der aus virgin PP (Neumaterial) besteht. Die Kapazitätslage kann in diesem Beispiel TLO umfassen.

Der wenigstens eine Schweißvermittler kann recycliertes thermoplastisches Material, insbesondere recyclierten thermoplastischen Kunststoff, insbesondere rPP, als Hauptkomponente umfassen. Der Ausdruck "als Hauptkomponente umfassen" bedeutet, dass das Material des wenigstens einen Schweißvermittlers mehr als 50%, insbesondere mehr als 70%, insbesondere mehr als 90% recycliertes thermoplastisches Material, insbesondere rPP, umfasst, oder dass das Material des wenigstens einen Schweißvermittlers daraus besteht. Der Ausdruck wird hierin auch für weitere Teile des Staubsaugerfilterbeutels verwendet. In diesen Fällen bedeutet er entsprechend, dass das Material des jeweiligen Teils mehr als 50%, insbesondere mehr als 70%, insbesondere mehr als 90% des angegebenen Kunststoffs umfasst, oder dass das Material des jeweiligen Teils aus dem angegebenen Kunststoff besteht.

Der wenigstens eine Schweißvermittler kann aber auch thermoplastisches Neumaterial umfassen bzw. daraus bestehen. Die Menge ist im Vergleich zur Gesamtmenge an Beutelmaterial sehr gering, so dass die Recyclingquote für den Gesamtbeutel kaum beeinflusst wird.

Der für die Zwecke der vorliegenden Erfindung verwendete Begriff "recyclierter Kunststoff" ist dabei synonym zu verstehen zu "Kunststoffrecyclaten". Zur begrifflichen Definition wird hierbei auf die Norm DIN EN 15347: 2007 verwiesen.

Als Materialzuschnitt wird hierin ein Element bezeichnet, dessen Ausdehnung in wenigstens einer Richtung kleiner ist, als die der Wandungsteile, zwischen denen der Materialzuschnitt angeordnet ist. Mit anderen Worten ist der Materialzuschnitt keine vollflächige Lage der Beutelwand, insbesondere also keine vollflächige Schicht des Vliesstofflaminats, aus dem die Beutelwand gebildet wird.

Der Materialzuschnitt kann eine beliebige Geometrie aufweisen. Insbesondere kann der Materialzuschnitt als rechteckiger Streifen ausgebildet sein. In diesem Fall kann auch von einem Materialstreifen oder "Pad" gesprochen werden. Der streifenförmige Materialzuschnitt kann insbesondere eine Länge aufweisen, die kleiner oder gleich der Länge der wenigstens einen Schweißnaht in Nahtlängsrichtung ist. Mit anderen Worten kann der streifenförmige Materialzuschnitt also kürzer oder höchstens gleich lang wie die wenigstens eine Schweißnaht ausgebildet sein.

Die Breite eines streifenförmigen Materialzuschnitts, also dessen Ausdehnung quer zur Nahtlängsrichtung, kann ebenfalls kleiner oder gleich der Breite der wenigstens einen Schweißnaht sein. Die Breite des streifenförmigen Materialzuschnitts kann aber auch größer als die Breite der wenigstens einen Schweißnaht sein, bevorzugt allerdings weniger als das Doppelte der Breite der wenigstens einen Schweißnaht.

Der wenigstens eine Schweißvermittler kann sich auch teilweise außerhalb der Schweißnaht befinden, insbesondere zum Beutelinneren hin über die Schweißnaht vorstehen.

Die Beutelwand des Staubsaugerfilterbeutels umfasst ein luftdurchlässiges Material, das mehrlagig aufgebaut ist. Man spricht auch von einem Laminat. Durch Einsatz von recycliertem Kunststoff wenigstens in der Stützlage und der Kapazitätslage wird in ökologischer Hinsicht ein deutlich vorteilhafter Filterbeutel bereitgestellt. Im Gegensatz zu aus dem Stand der Technik bekannten Staubsaugerfilterbeuteln wird somit weniger oder gar kein frisches/reines (virgin) Kunststoffmaterial zur Herstellung der der Beutelwand des Staubsaugerfilterbeutels zu Grunde liegenden Vliesstoffe bzw. Faservliese verwendet, sondern es gelangen überwiegend oder ausschließlich Kunststoffe zum Einsatz, die bereits in Verwendung waren und durch entsprechende Recyclingverfahren wiedergewonnen wurden. Durch den erfindungsgemäßen wenigstens einen Schweißvermittler wird auch die Schweißnahtfestigkeit gegenüber im Stand der Technik bekannten Beuteln verbessert.

Im Sinne der vorliegenden Erfindung bezeichnet ein Vliesstoff dabei ein Wirrgelege, das einen Verfestigungsschritt durchlaufen hat, so dass es eine ausreichende Festigkeit aufweist, um zum Beispiel maschinell (also in industriellem Maßstab) zu Rollen auf- bzw. abgewickelt zu werden. Die für ein Aufwickeln minimal erforderliche Bahnspannung beträgt 0,044 N/mm. Die Bahnspannung sollte nicht höher als 10% bis 25% der Mindesthöchstzugkraft (gemäß DIN EN 29073-3:1992-08) des aufzuwickelnden Materials betragen. Daraus resultiert eine Mindesthöchstzugkraft für ein aufzuwickelndes Material von 8,8 N pro 5 cm Streifenbreite.

Ein Faservlies oder kurz nur "Vlies" genannt entspricht einem Wirrgelege, das jedoch keinen Verfestigungsschritt durchlaufen hat, so dass im Gegensatz zu einem Vliesstoff ein derartiges Wirrgelege keine ausreichende Festigkeit aufweist, um zum Beispiel maschinell zu Rollen auf- bzw. abgewickelt zu werden.

Der Begriff Vliesstoff ("Nonwoven") wird in anderen Worten gemäß der Definition nach ISO Standard ISO9092:1988 bzw. CEM Standard EN29092 verwendet. Details zur Verwendung der hierin beschriebenen Definitionen und/oder Verfahren lassen sich auch dem Standardwerk "Vliesstoffe", W. Albrecht, H. Fuchs, W. Kittelmann, Wiley-VCH, 2000, entnehmen.

Für den wenigstens einen Schweißvermittler kann sowohl ein Vliesstoff als auch ein Faservlies Verwendung finden. Es ist demnach entweder von einem Vlieszuschnitt oder einem Vliesstoffzuschnitt die Rede. Wenn beide Alternativen angeführt werden, ist hierin auch verkürzend von Vlies- oder Vliesstoffzuschnitt die Rede.

Alternativ kann für den Schweißvermittler auch eine, insbesondere extrudierte, Folie, ein, insbesondere extrudiertes, Netz (netting), ein Garn oder eine Schnur verwendet werden.

Der wenigstens eine Schweißvermittler kann insbesondere aus einem Stapelfaservliesstoff oder einem Extrusionsvliesstoff hergestellt sein. Im Falle von einem Stapelfaservliesstoff umfasst der Schweißvermittler entsprechend Fasern, im Falle von einem Extrusionsvliesstoff sogenannte Filamente. Entsprechend sind auch Stapelfaservliese oder Extrusionsvliese möglich. Insbesondere kann der wenigstens eine Schweißvermittler einen Meltblown-Vliesstoff umfassen oder daraus bestehen.

Die Fasern oder Filamente des Schweißvermittlers können einen mittleren Durchmesser von weniger als 5 µm aufweisen.

Der mittlere Durchmesser der Fasern oder Filamente kann dabei mikroskopisch, insbesondere durch Licht- oder Rasterelektronenmikroskopie, gemessen werden. Insbesondere kann der mittlere Durchmesser der Fasern oder Filamente des Schweißvermittlers wie folgt bestimmt werden: Man entnimmt wenigstens fünf Proben des zu untersuchenden Materialzuschnitts, wobei jede Probe einem runden Ausschnitt entspricht, beispielsweise in der Größe des Probenhalters des Mikroskops. Beispielsweise kann jeder Ausschnitt eine Scheibe mit einem Durchmesser von 12,5 mm sein. Die Dicke der jeweiligen Probe entspricht der Dicke des zu untersuchenden Materialzuschnitts. Die jeweilige Probe wird dann in Draufsicht auf die kreisförmige Fläche untersucht. Für jede Probe werden insbesondere mittels eines Rasterelektronenmikroskops bei einer Vergrößerung von 1000fach eine oder mehrere Aufnahmen gemacht. Bei mehreren Aufnahmen sollen diese von nicht überlappenden Teilbereichen der Probe stammen. Für jede Probe werden in der einen oder den mehreren Aufnahmen für alle Fasern/Filamente der Durchmesser bestimmt. Die Anzahl der wenigstens fünf Proben und/oder die Anzahl der Aufnahmen je Probe werden so gewählt, dass wenigstens 500 Durchmesser-Messwerte erhalten werden. Aus diesen wenigstens 500 Messwerten wird dann ein ungewichtetes arithmetisches Mittel berechnet, welches dem mittleren Durchmesser der Fasern/Filamente des Materialzuschnitts entspricht.

Die Messungen können beispielsweise mit einem "Phenom ProX scanning electron microscope (SEM)" der Firma "Thermo Fisher Scientific" durchgeführt werden. Die Vermessung der Fasern/Filamente kann mit dem dafür erhältlichen Programm "FiberMetric", ebenfalls der Firma "Thermo Fisher Scientific", durchgeführt werden.

Das Flächengewicht des wenigstens einen Schweißvermittlers kann zwischen 10 und 150 g/m², insbesondere zwischen 10 und 100 g/m², betragen.

Der Schmelzflussindex (MFI) des Materials des wenigstens einen Schweißvermittlers, insbesondere im Fall eines Meltblown-Vliesstoffs, kann mehr als 200 g/10min, insbesondere mehr als 300 g/10min betragen. Das Material ist als Schmelze also sehr flüssig, von der Viskosität her ähnlich der von Wasser, und kann so eine stabilere Verbindung ermöglichen. Insbesondere dringt das Material so gut in die angrenzenden Teile der zu verbindenden Wandungsteile ein. Im Fall der nicht vorveröffentlichten Europäischen Patentanmeldung 18 213 001, wurde dagegen vorteilhafterweise ein zähflüssiges Material gewählt, um trotz der groben, luftdurchlässigen Ausbildung der dortigen vollflächigen Zwischenlage eine vorteilhafte Verbindung zu erhalten.

Der Schmelzflussindex, auch als Schmelze-Massefließrate bezeichnet, dient der Charakterisierung des Fließverhaltens eines Kunststoffs bei vorherbestimmten Druck- und Temperaturbedingungen. Mit anderen Worten ist der Schmelzflussindex ein Maß für das Fließverhalten einer Kunststoffschmelze.

Der Schmelzflussindex ist nach ISO 1133 definiert und wird mittels eines Kapillarrheometers gemessen. Der Schmelzflussindex gibt die Masse der Thermoplastschmelze an, die in 10 Minuten unter einer vorherbestimmte Druckbeaufschlagung durch eine vorherbestimmte Düse gedrückt wird.

Das Material des wenigstens einen Schweißvermittlers kann eine geringere Schmelztemperatur aufweisen, als das Material der Kapazitätslage, der Feinfilterlage und/oder der Stützlage. Die Schmelztemperatur bezeichnet die Temperatur, bei der ein Stoff schmilzt, also vom festen in den flüssigen Aggregatzustand übergeht. Die Schmelztemperatur ist üblicherweise nur sehr wenig vom Druck abhängig. Im Rahmen der Erfindung soll die Schmelztemperatur bei einem Druck von 1 bar gemessen werden. Es ist denkbar, dass die Kapazitätslage, die Feinfilterlage und/oder die Stützlage Materialien umfassen oder aus solchen bestehen, die nicht schmelzen können. Auch in diesem Falle ist die Schmelztemperatur des Materials des wenigstens einen Schweißvermittlers im Sinne der Erfindung geringer als die des entsprechenden Materials. An die Kapazitätslage kann zum Beutelinneren hin eine Schutzlage anschließen, die aus einem Vliesstoff gefertigt ist, der einen recyclierten Kunststoff umfasst. Die Schutzlage kann insbesondere aus einem Vliesstoff mit rPP als Hauptkomponente hergestellt sein.

Die Stützlage kann insbesondere ein Spinnvliesstoff (Spunbond) sein, der rPET als Hauptkomponente umfasst oder daraus besteht.

Im Falle, dass der wenigstens eine Schweißvermittler einen Vliesstoff umfasst, kann der Vliesstoff ein kardiertes Material umfassen. Als Bindeschritt kommen dabei sowohl mechanische Verfahren (z.B. Vernadeln) als auch thermische Verfahren (z.B. Kalandrieren) in Frage. Ebenfalls möglich ist die Verwendung von Bindefasern oder Klebemitteln, etwa einem Latexkleber. Extrusionsvliesstoffe, z.B. Spinnvliesstoffe, oder Airlaid Materialien sind auch möglich. Der Vliesstoff des wenigstens einen Schweißvermittlers kann Bikomponentenfasern umfassen. Bikomponentenfasern (BiCo-Fasern) können aus einem Kern sowie einem den Kern umhüllenden Mantel gebildet sein. In diesem Fall kann insbesondere der Kern aus rPET und die Hülle aus rPP gebildet sein oder umgekehrt der Kern aus rPP und die Hülle aus rPET. Neben Kern/Mantel Bikomponentenfasern können auch die anderen gebräuchlichen Varianten von Bikomponentenfasern, z. B. side-by-side, verwendet werden.

Die Bikomponentenfasern können als Stapelfasern vorliegen oder als Filamente bei einem Extrusionsvliesstoff (beispielsweise Meltblownvliesstoff) ausgebildet sein.

Der Staubsaugerfilterbeutel gemäß der vorliegenden Erfindung ist in Form eines Staubsaugerfilterbeutels mit einer Beutelwand, wobei die Beutelwand wenigstens eine Falte umfasst, ausgebildet. Der Staubsaugerfilterbeutel kann als Seitenfaltenbeutel ausgebildet sein. Seitenfaltenbeutel stellen eine modifizierte Form eines Flachbeutels dar und umfassen festgelegte oder ausstülpbare Seitenfalten.

Die Beutelwand umfasst wenigstens eine Falte, insbesondere eine Seitenfalte, deren Faltenschenkel durch die wenigstens eine Schweißnaht fixiert werden, sodass in einem ersten Teil der wenigstens einen Schweißnaht durch die Faltung vier oder mehr Bereiche der Wandungsteile überlappend miteinander verbunden sind, während in einem zweiten Teil der wenigstens einen Schweißnaht nur zwei Bereiche der Wandungsteile überlappend miteinander verbunden sind, und wobei der wenigstens eine Schweißvermittler überwiegend im zweiten Teil angeordnet ist. Die Erfinder haben erkannt, dass dort, wo weniger Lagen übereinanderliegen, die Schweißnahtfestigkeit üblicherweise geringer ist, als dort wo eine entsprechende Mehrlagigkeit vorliegt. Insofern kann dort gezielt ein Schweißvermittler eingesetzt werden, um die Schweißnahtfestigkeit zu erhöhen.

Der Ausdruck "überwiegend" kann dabei insbesondere bedeuten, dass der Schweißvermittler zu mehr als 50%, insbesondere mehr als 75%, seiner Fläche mit dem zweiten Teil der wenigstens einen Schweißnaht überlappt. Ein Teil des Schweißvermittlers kann auch im ersten Teil der wenigstens einen Schweißnaht angeordnet sein und ein weiterer Teil kann außerhalb der wenigstens einen Schweißnaht, also nicht mit dieser überlappend, angeordnet sein. Der Schweißvermittler kann aber auch ausschließlich im zweiten Teil angeordnet sein. Insbesondere können zwei gegenüberliegende Seitenfalten vorgesehen sein, der Staubsaugerfilterbeutel also ein Seitenfaltenbeutel sein. In diesem Fall kann der Schweißvermittler überwiegend zwischen den Seitenfalten angeordnet sein. Alternativ kann sich der Schweißvermittler auch entlang der gesamten Schweißnaht erstrecken und so sowohl im mehrlagigen ersten Teil also auch im zweilagigen zweiten Teil der Schweißnaht die Schweißnahtfestigkeit erhöhen.

Die wenigstens zwei Wandungsteile können auch durch mehr als eine Schweißnaht verbunden sein. Im Beispiel eines Flachbeutels kann die Beutelwand beispielsweise zwei Wandungsteile umfassen, nämlich einen oberen und einen unteren Wandungsteil, die entlang ihres Umfangs miteinander verschweißt sind. In diesem Fall sind vier Schweißnähte vorgesehen, nämlich zwei Längsschweißnähte und zwei Querschweißnähte ("Längs" und "Quer" sind auf die Maschinenrichtung bei der Herstellung bezogen). Bei einem komplexeren Staubsaugerfilterbeutel können auch mehr Wandungsteile und mehr diese verbindende Schweißnähte vorgesehen sein.

Es können mehrere Schweißvermittler in der wenigstens einen Schweißnaht oder in mehreren die wenigstens zwei Wandungsteile verbindenden Schweißnähten vorgesehen sein, wobei wenigstens zwei der Schweißvermittler unterschiedlich ausgebildet sind. Dadurch ist es möglich, die Schweißvermittler spezifisch für die Belastung, die an den kritischen Stellen auftreten, auszuwählen.

Die unterschiedlichen Schweißvermittler können sich in ihrer Größe, ihrer Geometrie, ihrem Material, ihrer Grammatur und/oder ihrer Struktur unterscheiden. Die Struktur kann hierbei beispielsweise durch das Herstellungsverfahren, den Faserdurchmesser und/oder die Verfestigung im Falle eines Vliesstoffes bestimmt sein. Im Falle eines Netzes kann die Struktur durch die Maschengröße oder den Durchmesser der Filamente bestimmt sein. Im Fall eines Garns oder einer Schnur kann die Struktur durch den Durchmesser der Filamente bestimmt sein, während die Größe der Länge und die Geometrie der Querschnittsform entsprechen kann.

Die Halteplatte des Staubsaugerfilterbeutels nach Anspruch 1 kann an eine Halteeinrichtung in einem Staubsaugergehäuse anbringbar sein. Dadurch kann die Halteplatte im Staubsaugergehäuse in einer vorbestimmten Position anordenbar, insbesondere fixierbar, sein. Die Halteplatte kann eine Durchgangsöffnung aufweisen, welche mit einer Durchgangsöffnung in der Beutelwand fluchtet, so dass eine Einströmöffnung gebildet wird, durch welche die zu reinigende Luft in das Innere des Staubsaugerfilterbeutels strömen kann.

Die Halteplatte kann ebenfalls einen recyclierten Kunststoff umfassen oder aus einem oder mehreren recyclierten Kunststoffen bestehen. Insbesondere kann die Halteplatte rPP und/oder rPET umfassen oder daraus bestehen.

Der Schweißvermittler zur Verstärkung der Schweißnahtfestigkeit der Verbindung zwischen Halteplatte und Beutelwand kann eines oder mehrere der oben genannten Merkmale aufweisen.

Der Schweißvermittler kann insbesondere als thermoplastische Folie ausgebildet sein. Je nach Material der Außenlage der Beutelwand und der Halteplatte kann das thermoplastische Elastomer (TPE) der Folie ein TPE auf Basis von PP oder auf Basis von PET sein. Das Material sollte aufeinander abgestimmt sein, d.h. bei einer Halteplatte und einer Außenlage mit PET als Hauptkomponente sollte auch das Dichtmaterial als Hauptkomponente PET umfassen, bzw. PP, wenn Halteplatte und Außenlage PP als Hauptkomponente umfassen.

Der Staubsaugerfilterbeutel nach Anspruch 1 kann aber auch eine Halteplatte umfassen, die nicht über einen Schweißvermittler, sondern unmittelbar mit der Beutelwand verschweißt ist.

Weiterhin ist es möglich, dass im Innenraum der beschriebenen Staubsaugerfilterbeutel mindestens ein Strömungsverteiler und/oder mindestens ein Diffusor angeordnet sind, wobei bevorzugt der mindestens eine Strömungsverteiler und/oder der mindestens eine Diffusor aus einem recyclierten Kunststoff oder mehreren recyclierten Kunststoffen gebildet ist. Derartige Strömungsverteiler bzw. Diffusoren sind z.B. aus den Patentanmeldungen EP 2 263 508, EP 2 442 703, DE 20 2006 020 047, DE 20 2008 003 248, DE 20 2008 005 050 bekannt. Auch die erfindungsgemäßen Staubsaugerfilterbeutel, inklusive Strömungsverteiler können entsprechend ausgestaltet sein.

Strömungsverteiler und Diffusoren werden vorzugsweise ebenfalls aus Vliesstoffen oder Laminaten von Vliesstoffen gefertigt. Für diese Elemente kommen bevorzugt die gleichen Materialien in Frage, wie für die Kapazitäts- und Verstärkungslagen (letztere auch als Stütz- oder Schutzlagen bezeichnet).

Eine weitere bevorzugte Ausführungsform sieht vor, dass der Gewichtsanteil aller recycelten Materialien, bezogen auf das Gesamtgewicht des Staubsaugerfilterbeutels mindestens 25 %, bevorzugt mindestens 30 %, weiter bevorzugt mindesten 40 %, weiter bevorzugt mindestens 50 %, weiter bevorzugt mindestens 60 %, weiter bevorzugt mindestens 70 %, weiter bevorzugt mindestens 80 %, weiter bevorzugt mindestens 90 %, insbesondere mindestens 95 % beträgt. Somit können die Anforderungen des Global Recycled Standard (GRS), v3 (August 2014) von Textile Exchange erreicht werden.

Für viele Kunststoff-Recyclate bestehen einschlägige internationale Normen. Für PET-Kunststoff-Recyclate ist beispielsweise die DIN EN 15353:2007 einschlägig. PP-Recyclate werden in DIN EN 15345:2008 charakterisiert. Zum Zwecke der entsprechenden speziellen Kunststoffrecyclate macht sich die vorliegende Patentanmeldung die Definitionen dieser internationalen Normen zu Eigen. Die Kunststoff-Recyclate können dabei unmetallisiert sein. Ein Beispiel hierfür sind aus PET-Getränkeflaschen zurückgewonnene Kunststoffflakes oder -chips. Ebenso können die Kunststoff-Recyclate metallisiert sein, z.B. wenn die Recyclate aus metallischen Kunststofffolien erhalten wurden, insbesondere metallisierten PET-Folien (MPET).

Recycliertes Polyethylenterephthalat (rPET) kann beispielsweise aus Getränkeflaschen, insbesondere aus sog. Bottleflakes, also Stücke gemahlener Getränkeflaschen, erhalten werden.

Die recyclierten Kunststoffe, insbesondere das recyclierte PET und/oder das recyclierte PP, sowohl in der metallisierten, als auch in der nicht metallisierten Fassung, können zu den entsprechenden Fasern versponnen werden, aus denen die entsprechenden Stapelfasern bzw. Meltblown- oder Spunbond-Vliesstoffe für die Zwecke der vorliegenden Erfindung hergestellt werden können.

Sofern hierin recyclierte Kunststoffe angesprochen werden, wird den Abkürzungen ein "r" vorangesetzt, beispielsweise rPP oder rPET. Sofern hierin Abkürzungen ohne vorangestelltes "r" verwendet werden, bezeichnet dies die Kunststoffneumaterialien (virgin Kunststoffe).

Das recyclierte Material aus der Herstellung von Textilien (TLO), welches insbesondere für die Kapazitätslage Anwendung finden kann, fällt insbesondere bei der Prozessierung von Textilmaterialien (insbesondere Textilfasern und -filamenten, sowie damit hergestellte linienförmige, flächenförmige und räumliche textile Gebilde), wie beispielsweise der Herstellung (umfassend Kardieren, Spinnen, Schneiden und Trocknen) oder dem Recyceln von Textilmaterialien an. Diese pulver- und/oder faserförmigen Materialien stellen Abfallmaterialien dar, die sich auf den zur Verarbeitung der Textilien verwendeten Maschinen oder Filtermaterialien absetzen können. Die Stäube (Pulver) bzw. Fasern werden normalerweise entsorgt und thermisch verwertet.

Bei dem pulver- und/oder faserförmigen recyclierten Material handelt es sich also beispielsweise um Produktionsabfall; dies gilt insbesondere für Material, das beim Kardieren, Spinnen, Schneiden oder Trocknen von Textilmaterialien als Abfallprodukt anfällt. Man spricht in diesem Fall auch von "pre-consumer waste".

Bei dem Recycling von Textilmaterialien, also der Verarbeitung (bspw. dem Zerkleinern) von gebrauchten Textilmaterialien oder Textilien (bspw. Altkleidern) entsteht ebenfalls pulver- und/oder faserförmiges recycliertes Material; hier spricht man von "post-consumer waste".

Das recyclierte Material aus der Herstellung von Textilien, TLO, kann also insbesondere Fasern und oder Filamente, die aus Abfallmaterialien aus der Textil- und Bekleidungsindustrie, aus Post-Consumer-Abfall (Textilien und ähnliches) und/oder aus Produkten, die für das Recycling gesammelt wurden, gewonnen wurden, umfassen.

Die Erfindung stellt außerdem ein Verfahren zur Herstellung eines Staubsaugerfilterbeutels gemäß Anspruch 10 bereit.

Das Verfahren umfasst außerdem ein Ausbilden wenigstens einer Falte, insbesondere Seitenfalte, deren Faltenschenkel durch die wenigstens eine Schweißnaht fixiert werden, sodass in einem ersten Teil der wenigstens einen Schweißnaht durch die Faltung vier oder mehr Bereiche der Wandungsteile überlappend miteinander verbunden sind, während in einem zweiten Teil der wenigstens einen Schweißnaht nur zwei Bereiche der Wandungsteile überlappend miteinander verbunden sind, und wobei der wenigstens eine Schweißvermittler überwiegend im zweiten Teil angeordnet wird. Dadurch erhält der Staubsaugerfilterbeutel auch mit Falten eine ausreichende Schweißnahtfestigkeit.

Der Ausdruck "überwiegend" kann auch hier bedeuten, dass der Schweißvermittler zu mehr als 50%, insbesondere mehr als 75%, seiner Fläche mit dem zweiten Teil der wenigstens einen Schweißnaht überlappt. Ein Teil des Schweißvermittlers kann auch im ersten Teil der wenigstens einen Schweißnaht angeordnet sein und ein weiterer Teil kann außerhalb der wenigstens einen Schweißnaht, also nicht mit dieser überlappend, angeordnet sein. Der Schweißvermittler kann aber auch ausschließlich im zweiten Teil angeordnet sein.

Wie oben ausgeführt kann der Staubsaugerfilterbeutel insbesondere als Seitenfaltenbeutel mit zwei gegenüberliegenden Seitenfalten ausgebildet sein, wobei der wenigstens eine Schweißvermittler im Bereich der Schweißnaht zwischen den Seitenfalten angeordnet ist.

Die Wandungsteile können in Form einer ersten und zweiten Materialbahn bereitgestellt werden. Das Verbinden der Wandungsteile zum Ausbilden der Beutelwand des Staubsaugerfilterbeutels kann dann außerdem ein Überlappen der Materialbahnen und ein Ausbilden zweier gegenüberliegender in Maschinenrichtung verlaufender Längsschweißnähte und zweier gegenüberliegender quer zur Maschinenrichtung verlaufender Querschweißnähte durch Ultraschallschweißen sowie ein Abtrennen des so gebildeten Beutels im Bereich der Querschweißnähte umfassen. Auf diesem Wege kann beispielsweise ein Flachbeutel hergestellt werden. Zur Ausbildung eines Seitenfaltenbeutels kann ein Einfalten der Seiten vor dem Ausbilden der Querschweißnähte stattfinden.

Weitere Merkmale und Vorteile der Erfindung werden nachfolgend anhand der beispielhaften Figuren beschrieben. Dabei zeigt:
Figur 1 schematisch den Aufbau eines beispielhaften Staubsaugerfilterbeutels; welcher nicht zur Erfindung gehört und nur zur Illustration gezeigt wird; und
Figur 2 die Verwendung eines Schweißvermittlers für einen beispielhaften Staubsaugerfilterbeutel.

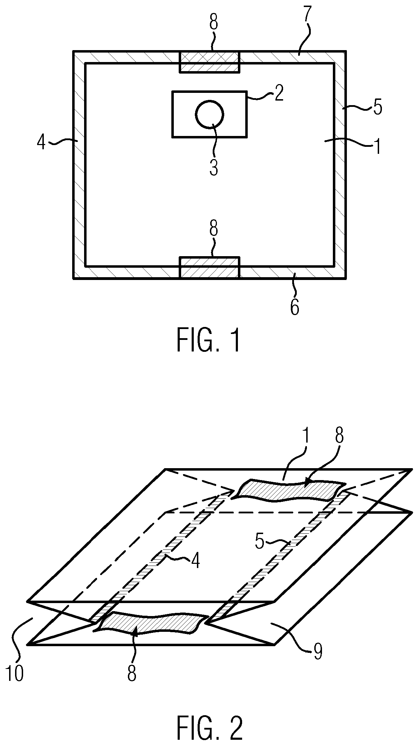

Figur 1 zeigt den schematischen Aufbau eines beispielhaften Staubsaugerfilterbeutels, welcher nicht zur Erfindung gehört und nur zur Illustration gezeigt wird. Der Filterbeutel umfasst eine Beutelwand 1, eine Halteplatte 2 sowie eine Einströmöffnung, durch welche die zu filternde Luft in den Filterbeutel strömt. Die Einströmöffnung wird hier durch eine Durchtrittsöffnung 3 in der Grundplatte der Halteplatte 2 und eine fluchtend dazu angeordnete Durchgangsöffnung in der Beutelwand 1 gebildet. Die Halteplatte 2 dient der Fixierung des Staubsaugerfilterbeutels in einer korrespondierenden Halterung in einem Gehäuse eines Staubsaugers.

Die Beutelwand 1 umfasst mehrere Vliesstofflagen oder mehrere Vliesstoff- und Faservlieslagen, die einander vom Beutelinneren zur Beutelaußenseite hin überlappen. Die Vliesstoff- oder Faservlieslagen können lose aufeinander liegen oder miteinander verbunden sein. Die Verbindungen können flächig (z.B. über Sprühkleber) oder punktuell (z.B. über ein Kalandriermuster) erfolgen.

Die einzelnen Lagen können insbesondere unterschiedliche Kunststoffmaterialien umfassen, und zwar untereinander und/oder innerhalb einer jeweiligen Lage.

Der beispielhafte Staubsaugerfilterbeutel der Figur 1 ist ein sogenannter Flachbeutel, bei dem die Beutelwand zwei Wandungsteile, nämlich eine Oberseite und eine Unterseite, umfasst, welche umlaufend miteinander verschweißt sind. Insbesondere sind zwei Längsschweißnähte 4, 5 und zwei Querschweißnähte 6, 7 (Bezeichnung auf Maschinenrichtung bei Herstellung bezogen) vorgesehen.

Sowohl die Oberseite als auch die Unterseite des Flachbeutels umfasst, wie oben erwähnt, mehrere Filtermateriallagen, insbesondere mehrere Vliesstofflagen oder mehrere Vliesstoff- und Faservlieslagen. Sowohl die Oberseite als auch die Unterseite können insbesondere aus einem Laminat mehrerer Vliesstofflagen gebildet sein. Die Erfindung ist jedoch nicht auf Flachbeutel beschränkt, sondern kann beispielsweise auch für Seitenfaltenbeutel oder Klotzbodenbeutel angewendet werden.

Vorteilhafterweise umfasst die Halteplatte 2 in diesem Beispiel eine Grundplatte aus einem recyclierten Kunststoffmaterial, beispielsweise recycliertem Polypropylen (rPP) oder recycliertem Polyethylenterephthalat (rPET).

Im Betrieb eines solchen Staubsaugerfilterbeutels ist die Schweißnahtfestigkeit für die Schweißnähte 4, 5, 6, 7 sowie für die Verschweißung der Halteplatte mit dem Beutelmaterial von besonderer Relevanz.

Das Vliesstofflaminat der Oberseite und Unterseite kann eine Schutzlage umfassen, welche zum Beutelinneren hin angeordnet ist, und aus einem Vliesstoff aus beliebigen recyclierten Fasern oder Filamenten gebildet werden kann. Beispielsweise kann die Schutzlage aus einem Vliesstoff gebildet sein, der rPP und/oder rPET umfasst oder daraus besteht. Insbesondere kann die Schutzlage ein Spunbond sein.

Als Rohstoff können beispielsweise PET-Abfälle (z. B. Stanzabfälle) und sogenannte Bottleflakes, also Stücke gemahlener Getränkeflaschen verwendet werden. Um die unterschiedliche Färbung der Abfälle zu überdecken, ist es möglich, das Recyclat einzufärben. Als thermisches Bindeverfahren für die Verfestigung des Spinnvlieses zu einem Spunbond ist insbesondere das HELIX® (Comerio Ercole) Verfahren vorteilhaft.

An die Schutzlage zum Äußeren des Beutels hin anschließend kann eine Kapazitätslage angeordnet sein. Die Kapazitätslage bietet einen hohen Widerstand gegenüber Stoßbelastung, und ermöglicht ein Filtern von großen Schmutzpartikeln, ein Filtern eines signifikanten Anteils von kleinen Staubpartikeln und ein Speichern bzw. Zurückhalten von großen Mengen an Partikeln, wobei der Luft ein einfaches Durchströmen erlaubt wird, und somit ein geringer Druckabfall bei hoher Partikelbeladung resultiert. Die Kapazitätslage kann insbesondere ein Faservlies und/oder oder einen Vliesstoff umfassen, das bzw. der pulver- und/oder faserförmiges recycliertes Material aus der Herstellung von Textilien (TLO) umfasst, oder daraus bestehen. Die Kapazitätslage kann auch rPET und/oder rPP umfassen oder daraus bestehen.

Die Kapazitätslage weist vorzugsweise eine Grammatur von 5 bis 200 g/m², insbesondere von 10 bis 150 g/m², insbesondere von 20 bis 100 g/m², insbesondere 30 bis 50 g/m² auf.

Zur Außenseite der Beutelwand hin schließt an die Kapazitätslage weiter eine Feinfilterlage an. Die Feinfilterlage ist in diesem Beispiel ein Extrusionsvliesstoff, insbesondere ein Meltblownvliesstoff. Die Feinfilterlage kann insbesondere (virgin) Polypropylen, Bikomponentenfasern aus (virgin) Polypropylen und (virgin) Polyethylenterephthalat und/oder Bikomponentenfasern aus (virgin) Polypropylen und recycliertem-Polypropylen umfassen, oder daraus bestehen.

Eine Feinfilterlage dient der Erhöhung der Filtrationsleistung des mehrlagigen Filtermaterials durch Einfangen von Partikeln, die beispielsweise durch die Schutzlage und/oder die Kapazitätslage hindurch gelangen. Zur weiteren Erhöhung der Abscheideleistung kann die Feinfilterlage bevorzugt elektrostatisch (z.B. durch Coronaentladung oder Hydrocharging) aufgeladen werden, um insbesondere die Abscheidung von Feinstaubpartikeln zu erhöhen.

Gemäß einer vorteilhaften Ausgestaltungsform weist die Feinfilterlage eine Grammatur von 5 bis 100 g/m², insbesondere 10 bis 50 g/m², insbesondere 10 bis 30 g/m², auf.

Das Flächengewicht (Grammatur) wird gemäß DIN EN 29073-1: 1992-08 bestimmt.

Die in diesem Beispiel am Äußersten angeordnete Lage ist eine Stützlage. Eine Stützlage (manchmal auch "Verstärkungslage" genannt) ist dabei eine Lage, die dem mehrlagigen Verbund des Filtermaterials die notwendige mechanische Festigkeit verleiht. Bei der Stützlage kann es sich insbesondere um einen offenen, porösen Vliesstoff mit leichtem Flächengewicht handeln. Bei der Stützlage kann sich insbesondere um einen Spinnvliesstoff handeln, der rPET umfasst oder daraus besteht.

Einen Überblick über die einzelnen Funktionslagen innerhalb mehrlagiger Filtermaterialien für Staubsaugerfilterbeutel bietet die WO 01/003802.

Gemäß einem Ausführungsbeispiel der Erfindung ist zwischen der Oberseite und der Unterseite des Beutels im Bereich der Schweißnaht 6 ein Schweißvermittler in Form eines Materialzuschnitts 8 angeordnet, welcher einen recyclierten thermoplastischen Kunststoff umfasst. Es hat sich herausgestellt, dass ein solcher Schweißvermittler die Schweißnahtfestigkeit des Filterbeutels wesentlich verbessert, insbesondere an besonders kritischen Stellen. Die Positionierung des Schweißvermittlers 8 in Figur 1 ist nur beispielhaft, ebenso dessen Geometrie und Ausdehnung.

Eine besonders vorteilhafte Verbesserung der Höchstzugkraft der Schweißnähte (hierin kurz auch als "Schweißnahtfestigkeit" bezeichnet) lässt sich erzielen, wenn der Schweißvermittler als Vlies- oder Vliesstoffzuschnitt ausgebildet ist, dessen Flächengewicht zwischen 10 und 150 g/m² liegt, wobei gleichzeitig der mittlere Durchmesser der Fasern bzw. Filamente weniger als 5 µm beträgt, insbesondere bei einem Meltblown Extrusionsvliesstoff.

Die Bestimmung der Höchstzugkraft kann gemäß DIN EN 29073-3: 1992-08 durchgeführt werden, insbesondere mit einem Streifen von 5 cm Breite. Im Falle eines schmäleren Streifens skaliert die Höchstzugkraft mit der Streifenbreite. Beispielsweise hat ein 1 cm breiter Streifen 1/5 der Höchstzugkraft eines 5 cm breiten Streifens.

Die Mindesthöchstzugkraft der Schweißnähte kann 50 N /5 cm Streifenbreite betragen.

Der Schmelzflussindex des Materials des Schweißvermittlers (insbesondere bei einem Meltblown), insbesondere des verwendeten thermoplastischen Materials, kann mehr als 200 g/10 min betragen. Dadurch kann die Höchstzugkraft der Schweißnähte weiter erhöht werden. Die zum Schweißen verwendeten Sonotroden und Ambosse können eine glatte Oberfläche aufweisen. Vorteilhaft ist es aber, wenn die Sonotrode und/oder der Amboss für den Schweißvorgang eine Hoch-Tief-Struktur aufweist, die Oberfläche also relieffiert ist.

Figur 2 zeigt ein Beispiel der Anwendung eines Schweißvermittlers im Sinne der Erfindung. Insbesondere ist ein Seitenfaltenbeutel in einem Herstellungsschritt gezeigt, der bereits Längsschweißnähte 4, 5 und Seitenfalten 9, 10 aufweist. Wenn die Querschweißnähte gebildet werden, werden die Faltenschenkel der Seitenfalten 9, 10 durch diese Querschweißnähte fixiert. Im Bereich der Falten 9, 10 verbinden die Querschweißnähte dann vier überlappende Bereiche der Wandungsteile, während zwischen den Seitenfalten 9, 10 nur zwei Bereiche der Wandungsteile überlappend verbunden werden. Dieser Teil der Querschweißnähte zwischen den Seitenfalten hat sich deshalb als nicht ausreichend fest erwiesen. Um die Querschweißnähte in diesem Bereich zu verstärken ist dort ein Schweißvermittler 8 angeordnet.

In dieser Abbildung ist der Schweißvermittler 8 nur zwischen den Seitenfalten 9, 10 angeordnet. Es ist aber auch denkbar, dass Teile der Schweißvermittler 8 in dem Bereich der Querschweißnähte angeordnet sind, in denen vier überlappende Bereiche der Wandungsteile angeordnet sind. Überwiegend wären die Schweißvermittler 8 dennoch im Bereich zwischen den Seitenfalten 9, 10 angeordnet.

Alternativ könnten sich solche Schweißvermittler 8 auch entlang der gesamten Querschweißnähte erstrecken.

Zur Verdeutlichung des Effekts von solchen Schweißvermittlern 8 wurden folgende Vergleichsmessungen angestellt:
Filterbeutelmaterial ist ein Laminat aus einer Außenlage aus 40 g/m² rPET-Spinnvlies, einer 20 g/m² Meltblown Feinfilterlage und einer 60 g/m² kardierten Kapazitätslage aus 25% Bikomponentenfasern und 40% TLO und 35% rPET-Stapelfasern.

Die Tabelle gibt die Höchstzugkräfte bei 5 cm Streifenbreite [N] an, und zwar einmal für den Bereich zwischen den Seitenfalten 9, 10 (wie in Figur 2 gezeigt) und einmal für die Längsschweißnähte 4, 5.

| | Ohne Schweißvermittler | Schweißvermittler: | Schweißvermittler: | Schweißvermittler: |
|---|---|---|---|---|
| | | 80 g/m² PP-Meltblown | 50 gw/m² PP-Spinnvlies | 20 g/m² Krempelvlies |
| Bereich zwischen den Seitenfalten (9, 10) | 35 | 55 | 45 | 60 |
| Längsnaht (4, 5) | 45 | 50 | 55 | 65 |

Die Materialersparnis, die sich aus der Verwendung von Materialzuschnitten gegenüber der Verwendung vollflächiger Lagen ergibt, soll anhand der nachfolgenden Beispiele illustriert werden.

Eine vollflächige Lage mit einer Grammatur von 40 g/m² erzeugt bei einem Flachbeutel (also Lage in Oberseite und Unterseite, Beutelgröße: 34 cm x 30 cm) einen Materialeinsatz von 8,2 kg pro 1000 Filterbeutel. Bei einer Grammatur von 80 g/m² sind es entsprechend 16,4 kg pro 1000 Filterbeutel.

Demgegenüber entsteht bei einem Materialzuschnitt von 8 cm x 2,5 cm, wie er beispielsweise zwischen zwei Seitenfalten angeordnet werden kann, ein Materialeinsatz von 0,32 kg pro 1000 Filterbeutel, wenn ein solcher für beide Querschweißnähte vorgesehen wird, selbst wenn ein Vlies oder Vliesstoff mit einer Grammatur von 80 g/m² eingesetzt wird.

Ein durchgängiger Materialstreifen von 34 cm x 5 cm mit einer Grammatur von 80 g/m², wie er beispielsweise für eine Querschweißnaht einsetzbar ist, erzeugt einen Materialeinsatz von 1,4 kg pro 1000 Filterbeutel.

Ein durchgängiger Materialstreifen von 30 cm x 2 cm mit einer Grammatur von 80 g/m², wie er beispielsweise für eine Längsschweißnaht einsetzbar ist, erzeugt einen Materialeinsatz von 1,0 kg pro 1000 Filterbeutel.

Es versteht sich, dass in den zuvor beschriebenen Ausführungsbeispielen genannte Merkmale nicht auf diese speziellen Kombinationen beschränkt und auch in beliebigen anderen Kombinationen möglich sind. Weiterhin versteht es sich, dass in den Figuren gezeigte Geometrien nur beispielhaft sind und auch in beliebigen anderen Ausgestaltungen möglich sind.

## Patentansprüche

1. Staubsaugerfilterbeutel mit einer Beutelwand (1), die Beutelwand umfassend:
eine Stützlage umfassend recycliertes Polyethylenterephthalat, rPET;
eine Feinfilterlage aus einem Meltblown-Vliesstoff umfassend Polypropylen, PP, und/oder PET; und
eine Kapazitätslage aus einem Vliesstoff umfassend rPET, recycliertes textiles Material, TLO, und/oder rPP;
wobei die Beutelwand (1) wenigstens zwei durch wenigstens eine Schweißnaht (4, 5, 6, 7) verbundene Wandungsteile umfasst,
wobei im Bereich der wenigstens einen Schweißnaht (4, 5, 6, 7) wenigstens ein Schweißvermittler (8) in Form eines Materialzuschnitts zwischen den Wandungsteilen angeordnet ist, wobei der Schweißvermittler (8) ein thermoplastisches Material, insbesondere ein recycliertes thermoplastisches Material, umfasst, und
wobei die Beutelwand wenigstens eine Falte, insbesondere Seitenfalte (9, 10), umfasst, deren Faltenschenkel durch die wenigstens eine Schweißnaht (4, 5, 6, 7) fixiert werden, sodass in einem ersten Teil der wenigstens einen Schweißnaht (4, 5, 6, 7) durch die Faltung vier oder mehr Bereiche der Wandungsteile überlappend miteinander verbunden sind, während in einem zweiten Teil der wenigstens einen Schweißnaht nur zwei Bereiche der Wandungsteile überlappend miteinander verbunden sind, und wobei der wenigstens eine Schweißvermittler (8) überwiegend im zweiten Teil angeordnet ist.

2. Staubsaugerfilterbeutel nach Anspruch 1, wobei der wenigstens eine Schweißvermittler (8) streifenförmig ausgebildet ist und eine Länge aufweist, die kleiner oder gleich der Länge der wenigstens einen Schweißnaht (4, 5, 6, 7) in Nahtlängsrichtung ist.

3. Staubsaugerfilterbeutel nach Anspruch 1 oder 2, wobei der wenigstens eine Schweißvermittler (8) als Vlies- oder Vliesstoffzuschnitt ausgebildet ist und das Flächengewicht des wenigstens einen Schweißvermittlers (8) zwischen 10 und 150 g/m², insbesondere zwischen 10 und 100 g/m² beträgt.

4. Staubsaugerfilterbeutel nach einem der vorangegangenen Ansprüche, wobei das thermoplastische Material des wenigstens einen Schweißvermittlers (8) einen Schmelzflussindex von mehr als 200 g/10min, insbesondere mehr als 300 g/10min, aufweist, insbesondere im Falle eines Meltblown-Vliesstoffes.

5. Staubsaugerfilterbeutel nach einem der vorangegangenen Ansprüche, wobei das thermoplastische Material des wenigstens einen Schweißvermittlers (8) eine geringere Schmelztemperatur aufweist, als das Material der Kapazitätslage, der Feinfilterlage und/oder der Stützlage.

6. Staubsaugerfilterbeutel nach einem der vorangegangenen Ansprüche, wobei der wenigstens eine Schweißvermittler (8) als Vlies- oder Vliesstoffzuschnitt ausgebildet ist und die Fasern oder Filamente des wenigstens einen Schweißvermittlers einen mittleren Durchmesser von weniger als 5 µm aufweisen.

7. Staubsaugerfilterbeutel nach einem der vorangegangenen Ansprüche, wobei mehrere Schweißvermittler (8) in der wenigstens einen Schweißnaht (4, 5, 6, 7) oder in mehreren die wenigstens zwei Wandungsteile verbindenden Schweißnähte (4, 5, 6, 7) vorgesehen sind, wobei wenigstens zwei der Schweißvermittler (8) unterschiedlich ausgebildet sind.

8. Staubsaugerfilterbeutel nach Anspruch 7, wobei die unterschiedlichen Schweißvermittler (8) sich in ihrer Größe, ihrem Material, ihrer Grammatur und/oder Struktur unterscheiden.

9. Staubsaugerfilterbeutel nach einem der vorangegangenen Ansprüche, wobei das thermoplastische Material des wenigstens einen Schweißvermittlers (8) einen thermoplastischen Kunststoff, insbesondere PP, umfasst oder daraus besteht.

10. Verfahren zur Herstellung eines Staubsaugerfilterbeutels, umfassend die Schritte:
Bereitstellen zweier Wandungsteile, jeweils umfassend:
eine Stützlage umfassend recycliertes Polyethylenterephthalat, rPET;
eine Feinfilterlage aus einem Meltblown-Vliesstoff umfassend Polypropylen, PP, und/oder PET; und
eine Kapazitätslage aus einem Vliesstoff umfassend rPET, recycliertes textiles Material, TLO, und/oder rPP;
Anordnen wenigstens eines Schweißvermittlers (8) in Form eines Materialzuschnitts zwischen den Wandungsteilen, wobei der Schweißvermittler (8) ein thermoplastisches Material, insbesondere ein recycliertes thermoplastisches Material, umfasst; und
Verbinden der Wandungsteile durch wenigstens eine Schweißnaht (4, 5, 6, 7) zum Ausbilden einer Beutelwand (1), derart, dass die wenigstens eine Schweißnaht (4, 5, 6, 7) die beiden Wandungsteile und den wenigstens einen Schweißvermittler (8) umfasst;
das Verfahren außerdem umfassend Ausbilden wenigstens einer Falte, insbesondere einer Seitenfalte (9, 10), deren Faltenschenkel durch die wenigstens eine Schweißnaht (4, 5, 6, 7) fixiert werden, sodass in einem ersten Teil der wenigstens einen Schweißnaht (4, 5, 6, 7) durch die Faltung vier oder mehr Bereiche der Wandungsteile überlappend miteinander verbunden sind, während in einem zweiten Teil der wenigstens einen Schweißnaht (4, 5, 6, 7) nur zwei Bereiche der Wandungsteile überlappend miteinander verbunden sind, und wobei der wenigstens eine Schweißvermittler (8) überwiegend im zweiten Teil angeordnet wird.

## Claims

1. A vacuum cleaner filter bag having a bag wall (1) wherein the bag wall comprises:
a backing layer comprising recycled polyethylene terephthalate, rPET;
a fine filter layer made of a meltblown nonwoven fabric comprising polypropylene, PP, and/or PET; and
a capacitance layer made of a nonwoven fabric comprising rPET, recycled textile material, TLO, and/or rPP;
wherein the bag wall (1) comprises at least two wall parts joined by at least one weld seam (4, 5, 6, 7),
wherein in the region of the at least one weld seam (4, 5, 6, 7) at least one weld promoter (8) in the form of a material blank is arranged between the wall parts, wherein the weld promoter (8) comprises a thermoplastic material, in particular a recycled thermoplastic material, and
wherein the bag wall comprises at least one gusset, in particular a side gusset (9, 10), the gusset legs of which are fixed by the at least one weld seam (4, 5, 6, 7) such that in a first part of the at least one weld seam (4, 5, 6, 7) four or more regions of the wall parts are joined in overlapping manner by the gusset, while in a second part of the at least one weld seam only two regions of the wall parts are joined in an overlapping manner, and wherein the at least one weld promoter (8) is arranged mainly in the second part.

2. The vacuum cleaner filter bag according to Claim 1, wherein the at least one weld promoter (8) is strip-shaped and has a length which is less than or equal to the length of the at least one weld seam (4, 5, 6, 7) in the longitudinal direction of the seam.

3. The vacuum cleaner filter bag according to claim 1 or 2, wherein the at least one weld promoter (8) is configured as a blank of non-woven or non-woven fabric and the weight per unit area of the at least one weld promoter (8) is between 10 and 150 g/m², in particular between 10 and 100 g/m².

4. The vacuum cleaner filter bag according to one of the preceding claims, wherein the thermoplastic material of the at least one weld promoter (8) has a melt flow index of less than 200 g/10 min, in particular less than 300 g/10 min, particularly in case of a meltblown non-woven fabric.

5. The vacuum cleaner filter bag according to one of the preceding claims, wherein the thermoplastic material of the at least one weld promoter (8) has a lower melting temperature than the material of the capacitance layer, the fine filter layer and/or the backing layer.

6. The vacuum cleaner filter bag according to one of the preceding claims, wherein the at least one weld promoter (8) is configured as a blank of non-woven or non-woven fabric and the fibers or filaments of the at least one weld promoter have an average diameter of less than 5 µm.

7. The vacuum cleaner filter bag according to one of the preceding claims, wherein a plurality of weld promoters (8) are provided in the at least one weld seam (4, 5, 6, 7) or in a plurality of weld seams (4, 5, 6, 7) joining the at least two wall parts, wherein at least two of the weld promoters (8) are formed differently.

8. The vacuum cleaner filter bag according to claim 7, wherein the different weld promoters (8) differ in size, material, grammage and/or structure.

9. The vacuum cleaner filter bag according to one of the preceding claims, wherein the thermoplastic material of the at least one weld promoter (8) comprises or consists of a thermoplastic, in particular PP.

10. A method for manufacturing a vacuum cleaner filter bag, comprising the following steps:
providing of two wall parts, each comprising:
a backing layer comprising recycled polyethylene terephthalate, rPET;
a fine filter layer made of a meltblown nonwoven fabric comprising polypropylene, PP, and/or PET; and
a capacitance layer made of a nonwoven fabric comprising rPET, recycled textile material, TLO, and/or rPP;
arranging at least one weld promoter (8) in form of a material blank between the wall parts, wherein the weld promoter (8) comprises a thermoplastic material, in particular a recycled thermoplastic material; and
joining the wall parts by at least one weld seam (4, 5, 6, 7) to form a bag wall (1) such that the at least one weld seam (4, 5, 6, 7) comprises the two wall parts and the at least one weld promoter (8);
wherein the method further comprises forming at least one gusset, in particular a side gusset (9, 10), the gusset legs of which are fixed by the at least one weld seam (4, 5, 6, 7) such that in a first part of the at least one weld seam (4, 5, 6, 7) four or more regions of the wall parts are joined in overlapping manner by the gusset, while in a second part of the at least one weld seam (4, 5, 6,7) only two regions of the wall parts are joined in overlapping manner, and wherein the at least one weld promoter (8) is arranged mainly in the second part.

## Revendications

1. Sac filtrant pour aspirateur à poussière ayant une paroi de sac (1), la paroi de sac comprenant :
une couche formant support comprenant du poly(téréphtalate d'éthylène) recyclé, rPET ;
une couche de filtration de particules fines constituée d'un textile non-tissé soufflé à l'état fondu comprenant du polypropylène, PP, et/ou du PET ; et
une couche de capacité constituée d'un textile non-tissé comprenant du rPET, un matériau textile recyclé, du TLO, et/ou du rPP ;
la paroi de sac (1) comprenant au moins deux éléments de paroi liés par au moins un cordon de soudure (4, 5, 6, 7),
dans la zone dudit cordon de soudure (4, 5, 6, 7), au moins une matière d'apport de soudage (8) sous forme d'une découpe de matériau étant disposée entre les éléments de paroi, la matière d'apport de soudage (8) comprenant un matériau thermoplastique, en particulier un matériau thermoplastique recyclé, et
la paroi de sac comprenant au moins un pli, particulièrement un pli latéral (9, 10) dont les flancs de pli sont fixés par ledit cordon de soudure (4, 5, 6, 7), de sorte que, dans une première partie du cordon de soudure (4, 5, 6, 7), quatre zones ou plus des éléments de paroi sont reliées les unes aux autres de manière à se chevaucher du fait du pliage, tandis que dans une seconde partie du cordon de soudure, uniquement deux zones des éléments de paroi sont reliées l'une à l'autre de manière à se chevaucher, et ladite matière d'apport de soudage (8) étant disposée essentiellement dans la seconde partie.

2. Sac filtrant pour aspirateur à poussière selon la revendication 1, ladite matière d'apport de soudage (8) ayant la forme d'une bande et présentant une longueur qui est inférieure ou égale à la longueur dudit cordon de soudure (4, 5, 6, 7) dans le sens longitudinal de la soudure.

3. Sac filtrant pour aspirateur à poussière selon la revendication 1 ou 2, ladite matière d'apport de soudage (8) étant conçue sous la forme d'une découpe de non-tissé ou de textile non-tissé et le grammage de ladite matière d'apport de soudage (8) étant compris entre 10 et 150 g/m², en particulier entre 10 et 100 g/m².

4. Sac filtrant pour aspirateur à poussière selon l'une des revendications précédentes, le matériau thermoplastique de ladite matière d'apport de soudage (8) présentant un indice d'écoulement à l'état fondu supérieur à 200 g/10 min, en particulier supérieur à 300 g/10 min, en particulier dans le cas d'un textile non-tissé soufflé à l'état fondu.

5. Sac filtrant pour aspirateur à poussière selon l'une des revendications précédentes, le matériau thermoplastique de ladite matière d'apport de soudage (8) présentant une température de fusion inférieure à celle du matériau de la couche de capacité, de la couche de filtration de particules fines et/ou de la couche formant support.

6. Sac filtrant pour aspirateur à poussière selon l'une des revendications précédentes, ladite matière d'apport de soudage (8) étant conçue sous la forme d'une découpe de non-tissé ou de textile non-tissé et les fibres ou les filaments de ladite matière d'apport de soudage ayant un diamètre moyen inférieur à 5 µm.

7. Sac filtrant pour aspirateur à poussière selon l'une des revendications précédentes, plusieurs matières d'apport de soudage (8) étant prévues dans ledit cordon de soudure (4, 5, 6, 7) ou dans plusieurs cordons de soudure (4, 5, 6, 7) reliant lesdits deux éléments de paroi, au moins deux des matières d'apport de soudage (8) étant conçues différemment.

8. Sac filtrant pour aspirateur à poussière selon la revendication 7, les différentes matières d'apport de soudage (8) étant différentes en termes de taille, de matériau, de grammage et/ou de structure.

9. Sac filtrant pour aspirateur à poussière selon l'une des revendications précédentes, le matériau thermoplastique de ladite matière d'apport de soudage (8) comprenant, ou étant constitué, d'un matériau thermoplastique, en particulier de PP.

10. Procédé de fabrication d'un sac filtrant pour aspirateur à poussière, comprenant les étapes suivantes :
la fourniture de deux éléments de paroi, comprenant chacun :
une couche formant support comprenant du poly(téréphtalate d'éthylène) recyclé, rPET ;
une couche de filtration de particules fines constituée d'un textile non-tissé soufflé à l'état fondu comprenant du polypropylène, PP, et/ou du PET ; et
une couche de capacité à base d'un textile non-tissé comprenant du rPET, un matériau textile recyclé, du TLO, et/ou du rPP ;
la mise en place d'au moins une matière d'apport de soudage (8) sous la forme d'une découpe de matériau entre les éléments de paroi, la matière d'apport de soudage (8) comprenant un matériau thermoplastique, en particulier un matériau thermoplastique recyclé ; et
l'assemblage des éléments de paroi à l'aide d'au moins un cordon de soudure (4, 5, 6, 7) pour former une paroi de sac (1) d'une manière telle que ledit cordon de soudure (4, 5, 6, 7) comprend les deux éléments de paroi et ladite matière d'apport de soudage (8) ;
le procédé comprenant en outre la formation d'au moins un pli, en particulier un pli latéral (9, 10), dont les flancs de pli sont fixés au moyen dudit cordon de soudure (4, 5, 6, 7), de sorte que, dans une première partie dudit cordon de soudure (4, 5, 6, 7), quatre zones ou plus des éléments de paroi sont reliées les unes aux autres de manière à se chevaucher du fait du pliage, tandis que dans une seconde partie dudit cordon de soudure (4, 5, 6, 7), seulement deux zones des éléments de paroi sont reliées l'une à l'autre de manière à se chevaucher, et ladite matière d'apport de soudage (8) étant disposée essentiellement dans la seconde partie.
